# EUROPEAN PATENT APPLICATION

(11) **EP 1 031 982 A2**
(43) Date of publication of application: **30.08.2000**
(21) Application number: 00100582.6
(22) Date of filing: 12.01.2000
(51) Int. Cl.: G11B 23/03

(54) **Disk Cartridge**

(30) Priority: 26.02.1999 JP 5049099
(71) Applicant: TDK Corporation, Chuo-ku, Tokyo-to 103 (JP)
(72) Inventor: Masaru, Ikebe, Tokyo 103 (JP); Yukio, Miyazaki, Tokyo 103 (JP)
(74) Representative: Liesegang, Roland, Dr.-Ing.

(57) **Abstract**

A disk cartridge adapted to fit a clamping plate to a disk-like medium without a mechanical connection while a necessary amount of play between the disk-like medium and the clamping plate in the casing main body is maintained.

A clamping plate 60 has a flange portion 61 at its outer peripheral portion. A disk-like medium 40 comprises an engaging opening 43 at a central portion to be engaged with a driving shaft of a recording/reproducing device, a seat portion 41 of recessed shape in cross section which is formed in a circumferential portion of the engaging opening 43 to receive the clamping plate 60 and a projection 41a formed in an outer peripheral portion of the seat portion 41 to project upward from a data recording surface 42 of the disk-like medium 40. A raised portion 22 is formed in an inner surface of an upper casing 20 at a position opposing the flange portion 61 of the clamping plate 60. A lower end face of the raised portion 22 is at a position close to the flange portion 61 of the clamping plate 60 when the disk-like medium 40 is at the highest position in the casing main body, and is at substantially the same level with an upper end face of the projection 41a of the disk-like medium 40 when the disk-like medium 40 is at the lowest position.

## Description

The present invention relates to a disk cartridge such as MD or the like, which receives therein a disk-like medium such as a photodisk, a photo-electro-magnetic disk or the like.

A conventional disk cartridge of such type is provided with a clamping plate at a central portion of a disk-like medium. The clamping plate is for holding the disk-like medium in the disk cartridge when the disk-like medium is driven to rotate by a recording/reproducing device.

In this case, when the disk-like medium is, for example, a photodisk, the substrate is made of resin such as polycarbonate. On the other hand, the clamping plate is made of a magnetic metal such as a magnetic stainless steel or the like in order that the clamping plate is attached to a rotating shaft of the recording/reproducing device. Accordingly, when the clamping plate was fixed to the photodisk by means of bonding, there caused a difference of thermal expansion coefficient between the resin and the metal, and a difference of temperature between them whereby a strain was produced in the photodisk to deteriorate the optical characteristics, and a bonding strength to the resin and the metal was reduced.

Further, in case that the clamping plate was fixed to the photodisk by deforming a resinous portion of the photodisk by applying heat or vibrations, a mechanical stress due to heat or vibrations was inevitably given to the photodisk, with the result that the optical characteristics were deteriorated.

In order to eliminate the above-mentioned drawbacks, there has been known a technique as disclosed in a publication such as JP-A-6-187757. The publication discloses a disk cartridge having such a construction that a clamping plate is placed (without fixing) at a central portion of a disk-like medium wherein a raised portion is provided in the casing of the disk cartridge to prevent the clamping plate from dropping from a seat portion in the clamping plate in a non-driving time. In the disclosed structure, since the clamping plate is not fixed to the disk-like medium, there is little possibility of causing a strain in the disk-like medium in addition that the provision of the raised portion can prevent the dropping (or coming off) of the clamping plate.

In the above-mentioned conventional disk cartridge, however, the raised portion formed in an inner surface of the casing was close to the clamping plate or the disk-type medium in order to prevent the dropping of the clamping plate. Accordingly, an amount of play (an allowance of movement) for the clamping plate or the disk-like medium in the casing was small. Therefore, when the disk-like medium (clamping plate) was held by a recording/reproducing device, there was a possibility that the disk-like medium could not be moved to a predetermined position, i.e., there caused an error of mounting.

Accordingly, it is an object of the present invention to provide a disk cartridge which allows a clamping plate to be attached to a disk-like medium without fixing, and which assures a necessary amount of play for the disk-like medium or the clamping plate in the casing.

In accordance with a first aspect of the present invention, there is provided a disk cartridge comprising a casing main body, formed by connecting an upper casing and a lower casing, to house a disk-like medium which is provided with a clamping plate at its central portion, wherein the clamping plate comprises a central portion and a flange portion formed in its outer peripheral portion at a position lower than the central portion; the disk-like medium comprises an engaging opening at a central portion to be engaged with a driving shaft of a recording/reproducing device, a seat portion of recessed shape in cross section which is formed in a circumferential portion of the engaging opening to receive the flange portion of the clamping plate and a projection formed in an outer peripheral portion of the seat portion to project upward from a data recording surface of the disk-like medium, and the upper casing is provided with a raised portion in its inner surface at a position opposing the flange portion of the clamping plate received on the seat portion of the disk-like medium.

In accordance with a second aspect of the present invention, there is provided the disk cartridge according to the first aspect wherein the disk-like medium has such a positional relation to the upper and lower casings that when an upper face of the disk-like medium contacts an inner surface of the upper casing, a lower end face of the raised portion of the upper casing comes close to the flange portion of the clamping plate, and when a lower face of the disk-like medium contacts an inner surface of the lower casing, the lower end face of the raised portion of the upper casing is at substantially the same level with or lower in position than an upper end face of the projection.

In accordance with a third aspect of the present invention, there is provided the disk cartridge according to the first aspect or the second aspect wherein the upper and lower casings are respectively provided at its inner surface side with a restricting rib which is located in the vicinity of an outer periphery of the disk-like medium to restrict the movement of the disk-like medium in a radial direction, and a clearance between an outer face of a side wall connecting the flange portion of the clamping plate to the central portion thereof and an inner peripheral wall of the raised portion of the upper casing and a clearance between an outer peripheral wall of the raised portion of the upper casing and an inner peripheral wall of the projection, of the disk-like medium are respectively larger than a clearance between the restricting rib and the outer periphery of the disk-like medium.

In drawings:
Figure 1 is a perspective view in an exploded state of the disk cartridge according to a first embodiment of the present invention;
Figure 2 is a plan view showing an inner face side of an upper casing;
Figure 3a, 3b and 3c are cross-sectional views taken along a line A-A in Figure 2 wherein Figure 3a shows a state that a disk-like medium is moved to the highest position in the disk cartridge, Figure 3c shows a state that the disk-like medium is at an intermediate position, and Figure 3c shows a state that the disk-like medium is at the lowest position; and
Figure 4 is a cross-sectional view showing the same state as in Figure 3c wherein there are shown an outer periphery of the disk-like medium and restricting ribs formed in the inside of the casing at positions in the vicinity of the outer periphery of the disk-like medium.

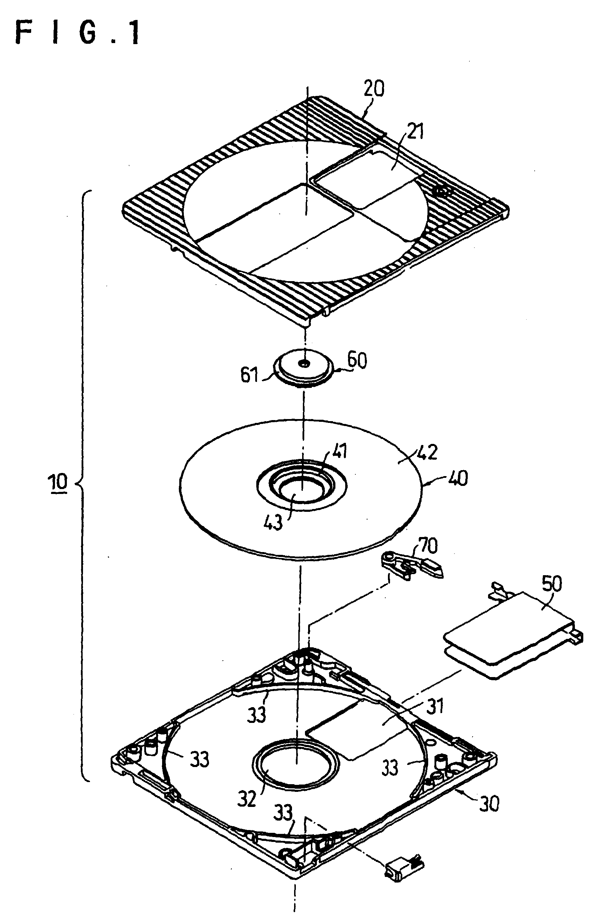

Preferred embodiments of the disk cartridge of the present invention will be described with reference to the drawings. Figure 1 is a perspective view in an exploded state of the disk cartridge according to an embodiment of the present invention wherein a mini-disk (MD) is exemplified as the disk cartridge.

In Figure 1, a disk cartridge 10 comprises a casing main body which is constituted by connecting an upper casing 20 and a lower casing 30, in which a disk-like medium (e.g., a photodisk) 40 is housed.

In the upper casing 20 and the lower casing 30, openings 21 and 31 are formed to expose the disk-like medium 40, the openings 21, 31 being adapted to allow the insertion of a recording/reproducing magnetic head. A clamping plate 60 is placed in a central portion of the disk-like medium 40 so that a recording/reproducing device can hold the disk-like medium 40. In a substantially central portion of the lower casing 30, an opening 32 having a circular shape is formed so as to allow the insertion of a driving shaft of the recording/reproducing device and to expose the clamping plate 60.

A shutter 50 having a channel shape in cross section is provided to open and shut the openings 21, 31 in the upper casing 20 and the lower casing 30. The width of the shutter 50 is slightly larger than widths of openings 21 and 31. When the shutter 50 is at a position for shutting, it is located to cover each of the openings 21, 31 of the upper and lower casings 20, 30, and at the same time, the shutter 50 is locked by a shutter lock 70. On the other hand, when the shutter 50 is at a position for opening, it is located to open each of the openings 21, 31.

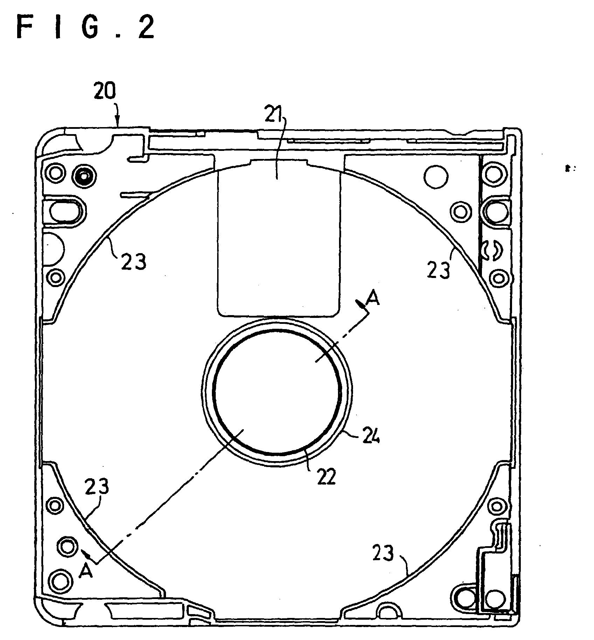

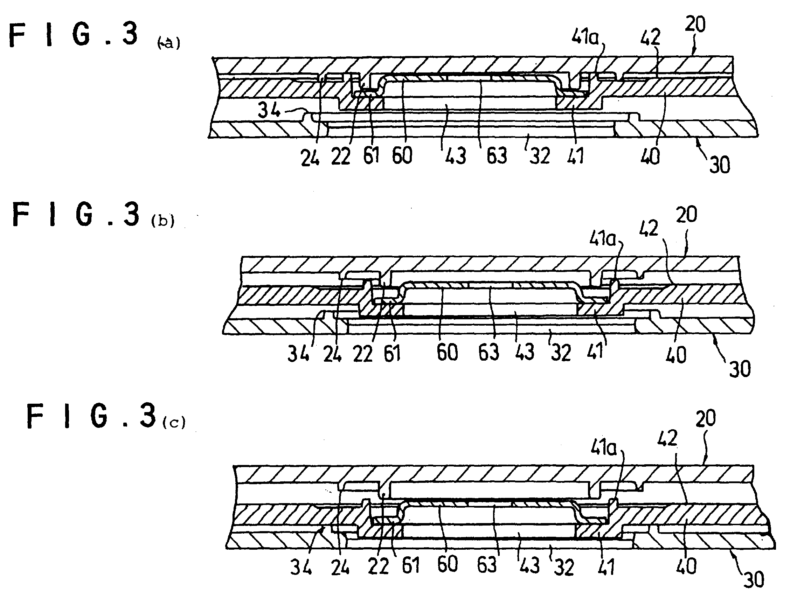

Figure 2 is a plan view showing an inner face side of the upper casing 20. Further, Figures 3a-3c are cross sectional views taken along a line A-A in Figure 2 of the disk cartridge 10 in cross section, wherein the disk-like medium 40 is at the highest position, an intermediate position and the lowest position in the movement in a vertical direction, respectively.

In a central portion of the disk-like medium 40, there is formed an engaging opening 43 to be engaged with a driving shaft of the recording/reproducing device, and a seat portion 41 is formed in a circumferential portion of the engage opening to receive the clamping plate 60. The seat portion 41 is annular and recessed. An annular projection 41a is formed in an outer peripheral of the seat portion 41 so as to project upward from a data recording surface 42 of the disk-like medium 40.

The clamping plate 60, made of a magnetic metal such as a magnetic stainless steel or the like, has a substantially circular plate-like shape in which a circular opening 63 is formed at its center. Further, a flange portion 61 is formed in an outer peripheral portion of the clamping plate 60 at a position lower than the central portion of it, the flange portion 61 being formed by a bending operation. When the clamping plate 60 is fitted onto the seat portion 41 of the disk-like medium 40, there is substantially no space remained between an outer peripheral edge of the flange portion 61 of the clamping plate 60 and an inner circumferential wall of the projection 41a of the disk-like medium 40.

A raised portion 22 such as an annular rib is formed at an inner face side of the upper casing 20. The raised portion 22 is provided at a position opposing the flange portion 61 of the clamping plate 60 when the clamping plate 60 is fitted onto the seat portion 41 of the disk-like medium 40.

A lower end face of the raised portion 22 of the upper casing 20 and an upper end face of the projection 41a of the disk-like medium 40 should have a relation in height level, which will be described below.

As shown in Figure 3a, when the disk-like medium 40 is moved to the highest position in the casing main body, an upper face portion of the disk-like medium 40 comes to contact with an annular disk-pushing rib 24 formed at an inner face side of the upper casing 20. The disk-pushing rib 24 is provided at an outer periphery side of the raise portion 22 in the inner face of the upper casing 20 and has the same center of circle as the raised portion 22, and it contacts the disk-like medium is a region of a predetermined range which is at an outer peripheral side of the seat portion 41 of the disk-like medium 40 and which is lower than a data recording surface 42 (a region other than the data recording region). The provision of the disk-pushing rib 24 is to prevent the data recording surface 42 of the disk-like medium 40 from contacting directly to an inner face of the upper casing 20.

Further, the upper end face of the annular projection 41a of the disk-like medium 40 contacts an inner face of the upper casing 20 (at a position outside of the raised portion 22). In this case, the lower end face of the raised portion 22 formed at an inner face side of the upper casing 20 comes close, with a slight clearance, to an upper face of the flange portion 61 of the clamping plate 60. Thus, a play (a gap) for the disk-like medium 40 can be maintained in the same manner as if the clamping plate 60 is firmly attached to the disk-like medium 40.

On the other hand, when the disk cartridge 10 is in no use, the disk-like medium 40 is at the lowest position in the casing main body as shown in Figure 3c. In this case, a lower face of the disk-like medium 40 is in contact with an annular disk-pushing rib 34 (which has the same function as the disk-pushing rib 24 of the upper casing 20) formed at an inner face side of the lower casing 30. At this moment, the lower end face of the raised portion 22 formed at an inner face side of the upper casing 20 is substantially flush with the upper end face of the projection 41a of the disk-like medium 40 as shown in Figure 3c. Accordingly, even when there is a shock to the disk cartridge 10 due to dropping or the like in a state of no use of the disk cartridge, the movement of the clamping plate 60 can be restricted by the sheet portion 41 of the disk-like medium 40 and the raised portion 22 of the upper casing 20, whereby there is no possibility that the clamping plate 60 comes off from a gap between the seat portion 4 of the disk-like medium 40 and the raised portion 22 of the upper casing 20.

In Figure 3c, it is not always that the lower end face of the raised portion 22 of the upper casing 20 is substantially flush with the upper end face of the projection 41a of the disk-like medium 40, but the lower end face of the raised portion 22 can be a position lower than the position of the upper end face of the projection 41a. Even in this case, there is no possibility that the clamping plate 60 comes off from a gap between the sheet portion 41 of the disk-like medium 40 and the raised portion 22 of the upper casing 20.

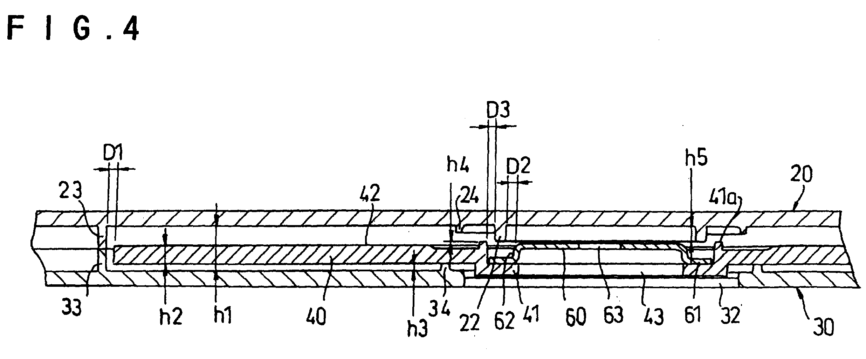

Figure 4 is a cross-sectional view similar to Figure 3c provided that an outer periphery of the disk-like medium 40 and restricting ribs 23, 33 formed in the upper casing 20 and the lower casing 30 at positions in the vicinity of an outer side of the outer periphery of the disk-like medium 40. In Figure 4, for example, when a distance h1 of the inner space of the casing main body of the disk cartridge 10, which is measured in a vertical direction, is 3 mm, the thickness h2 of the disk-like medium 40 is 1.2 mm, the height h3 of the disk-pushing rib 34 formed an inner face side of the lower casing 30 is 0.5 mm, the quantity of projection h4 of the projection 41a of the disk-like medium 40 from the data recording surface 42 is 0.3 mm, and the quantity of projection h5 of the raised portion 22 from an inner face of the upper casing 20 is 1 mm, the level of the lower end face of the raised portion 22 of the upper casing 20 can be flush with the level of the upper end face of the projection 41a of the disk-like medium 40.

In Figure 4, the restricting rib 23 for restricting a movement of the disk-like medium 40 is formed in an inner face of the upper casing 20 at a position outside the diameter of the disk-like medium 40. Similarly, the restricting rib 33 is formed in an inner face of the lower casing 30 at the position opposing the restricting rib 23. Accordingly, when the upper casing 23 and the lower casing 30 are joined, the lower end face of the restricting rib 23 of the upper casing 20 and the upper end face of the restricting rib 23 of the lower casing 30 are contact to each other.

Further, when the disk-like medium 40 is placed at the center of the casing main body in terms of a diametrical direction, there produces a clearance D1 between the outer periphery of the disk-like medium 40 and the restricting ribs 23, 33. Since the disk-like medium 40 has a certain amount of play in a diametrical direction in the casing main body, the outer periphery of the disk-like medium 40 can be moved in a diametrical direction by the direction toward D1 until the outer periphery of the disk-like medium 40 comes to contact with the restricting ribs 23, 33 of the upper and lower casings 20, 30.

The clearance D1 is formed to be smaller than a clearance D2 between an outer face of a side wall 62 which rises from an inner side of the flange portion 61 of the clamping plate 60 and an inner peripheral wall of the raised portion 22 and a clearance D3 between an outer peripheral wall of the raised portion 22 of the upper casing 20 and an inner peripheral wall of the projection 41a of the disk-like medium 40.

Accordingly, even when the disk-like medium 40 is moved in a diametrical direction in the casing main body, there is no possibility of the contact of the clamping plate 60 with the raised portion 22 of the upper casing 20 and the contact of the raised portion 22 of the upper casing 20 with the projection 41a of the disk-like medium 40 until the outer periphery of the disk-like medium 40 until the outer periphery of the disk-like medium 40 come to contact with the restricting ribs 23, 33. Therefore, an amount of play in a diametrical direction of the disk-like medium 40 in the casing main body can be maintained in the same manner as the conventional disk cartridge.

The present invention is not limited to the above-mentioned embodiment but various modifications can be possible as described below.
(1) In the above-mentioned embodiment, use of MD is exemplified as the disk cartridge 10. However, a disk cartridge holding therein a disk-like medium such as a photo-electro-magnetic disk other than the photodisk is applicable to the present invention.
(2) In the above-mentioned embodiment, each of the disk-pushing ribs 24, 34 is provided at an inner face side of each of the upper casing 20 and the lower casing 30. However, the disk-pushing ribs 24 of the upper casing 20 can be omitted. As shown in Figure 3a, when the disk-like medium 40 is at the highest position in the casing main body, the upper end face of the projection 41a of the disk-like medium 40 comes to contact with the inner face of the upper casing 20. With such structure, the disk-like medium 40 can be supported, and there is no risk that the data recording surface 42 directly contacts the inner face of the upper casing 20.

In accordance with the first aspect of the present invention, the flange portion of the clamping plate is fitted onto the seat portion without being fixed to the disk-like medium. While the disk-like medium can be movable in a vertical direction when it is housed in the casing main body, the presence of the raised portion of the upper casing, which opposes the flange portion of the clamping plate, restricts an undue movement in a vertical direction of the clamping plate, and the presence of the projection formed at an outer side of the raised portion and the seat portion prevents the clamping plate from dropping out the seat portion.

In the second aspect of the present invention, the upper face of the disk-like medium comes to contact with the inner face of the upper casing when the disk-like medium is moved to the highest position. In this case, the lower end face of the raised portion of the upper casing comes close to the flange portion of the clamping plate. On the other hand, when the disk-like medium is moved to the lowest position, the lower face portion of the disk-like medium comes to contact with the inner face of the lower casing. At this moment, the lower end face of the raised portion of the upper casing is substantially flush with or lower than the upper end face of the projection of the disk-like medium. Accordingly, it is possible to prevent certainly the dropping of the clamping plate from a space between the seat portion of the disk-like medium and the raised portion of the upper casing while a predetermined amount of play in a vertical direction for the disk-like medium in the casing main body can be maintained.

In accordance with the third aspect of the present invention, in the movement in a diametrical direction of the disk-like medium, there is no possibility of contact between the outer face of the side wall of the flange portion of the clamping plate and the raised portion of the upper casing and between the raised portion of the upper casing and the projection of the disk-like medium until the outer periphery of the disk-like medium comes to contact with the restricting ribs of the upper and lower casings. Accordingly, a predetermined amount of play in a diametrical direction of the disk-like medium can be maintained.

## Claims

1. In a disk cartridge comprising a casing main body, formed by connecting an upper casing and a lower casing, to house a disk-like medium which is provided with a clamping plate at its central portion, the disk cartridge being characterized in that:
the clamping plate comprises a central portion and a flange portion formed in its outer peripheral portion at a position lower than the central portion;
the disk-like medium comprises an engaging opening at a central portion to be engaged with a driving shaft of a recording/reproducing device, a seat portion of recessed shape in cross section which is formed in a circumferential portion of the engaging opening to receive the flange portion of the clamping plate and a projection formed in an outer peripheral portion of the seat portion to project upward from a data recording surface of the disk-like medium, and
the upper casing is provided with a raised portion in its inner surface at a position opposing the flange portion of the clamping plate received on the seat portion of the disk-like medium.

2. The disk cartridge according to Claim 1, wherein the disk-like medium has such a positional relation to the upper and lower casings that when an upper face of the disk-like medium contacts an inner surface of the upper casing, a lower end face of the raised portion of the upper casing comes close to the flange portion of the clamping plate, and when a lower face of the disk-like medium contacts an inner surface of the lower casing, the lower end face of the raised portion of the upper casing is at substantially the same level with or lower in position than an upper end face of the projection.

3. The disk cartridge according to Claim 1 or 2, wherein the upper and lower casings are respectively provided at its inner surface side with a restricting rib which is located in the vicinity of an outer periphery of the disk-like medium to restrict the movement of the disk-like medium in a radial direction, and a clearance between an outer face of a side wall connecting the flange portion of the clamping plate to the central portion thereof and an inner peripheral wall of the raised portion of the upper casing and a clearance between an outer peripheral wall of the raised portion of the upper casing and an inner peripheral wall of the projection, of the disk-like medium are respectively larger than a clearance between the restricting rib and the outer periphery of the disk-like medium.
